# EUROPEAN PATENT SPECIFICATION

(11) **EP 4 379 658 B1**
(45) Date of publication and mention of the grant of the patent: **11.03.2026**
(21) Application number: 23193684.0
(22) Date of filing: 28.08.2023
(51) Int. Cl.: G06T 7/11, G06T 7/00

(54) **METHOD FOR PROCESSING MEDICAL IMAGE**
VERFAHREN ZUR VERARBEITUNG MEDIZINISCHER BILDER
PROCÉDÉ DE TRAITEMENT D'IMAGE MÉDICALE

(30) Priority: 30.11.2022 JP 2022191015
(43) Date of publication of application: 05.06.2024
(73) Proprietor: FUJITSU LIMITED, Kawasaki-shi, Kanagawa 211-8588 (JP)
(72) Inventor: OKA, Ayaka, Kawasaki-shi, Kanagawa, 211-8588 (JP); BABA, Takayuki, Kawasaki-shi, Kanagawa, 211-8588 (JP); ISHIHARA, Masaki, Kawasaki-shi, Kanagawa, 211-8588 (JP); KARASUDANI, Ayu, Kawasaki-shi, Kanagawa, 211-8588 (JP); YAMAGUCHI, Tatsuya, Kawasaki-shi, Kanagawa, 211-8588 (JP)
(74) Representative: Hoffmann Eitle

(56) References cited:
- ISUNURI BALA VENKATESWARLU ET AL: "Fast brain tumour segmentation using optimized U-Net and adaptive thresholding", AUTOMATIKA - JOURNAL FOR CONTROL, MEASUREMENT, ELECTRONICS, COMPUTING AND COMMUNICATIONS, vol. 61, no. 3, 12 May 2020 (2020-05-12), GB, pages 352 - 360, XP093138238, ISSN: 0005-1144, DOI: 10.1080/00051144.2020.1760590
- HAN YUEXING ET AL: "Boundary Loss-Based 2.5D Fully Convolutional Neural Networks Approach for Segmentation: A Case Study of the Liver and Tumor on Computed Tomography", ALGORITHMS, vol. 14, no. 5, 30 April 2021 (2021-04-30), pages 144, XP093138398, ISSN: 1999-4893, DOI: 10.3390/a14050144
- GROS CHARLEY ET AL: "SoftSeg: Advantages of soft versus binary training for image segmentation", MEDICAL IMAGE ANALYSIS, OXFORD UNIVERSITY PRESS, OXOFRD, GB, vol. 71, 18 March 2021 (2021-03-18), XP086588707, ISSN: 1361-8415, [retrieved on 20210318], DOI: 10.1016/J.MEDIA.2021.102038
- ATIA NAOUAL ET AL: "Particle Swarm Optimization and Two-Way Fixed-Effects Analysis of Variance for Efficient Brain Tumor Segmentation", CANCERS, vol. 14, no. 18, 10 September 2022 (2022-09-10), CH, pages 4399, XP093138627, ISSN: 2072-6694, DOI: 10.3390/cancers14184399
- CHLEBUS GRZEGORZ ET AL: "Automatic liver tumor segmentation in CT with fully convolutional neural networks and object-based postprocessing", vol. 8, no. 1, 19 October 2018 (2018-10-19), US, XP093138258, ISSN: 2045-2322, Retrieved from the Internet <URL:https://www.nature.com/articles/s41598-018-33860-7> DOI: 10.1038/s41598-018-33860-7
- ANDREANNE LEMAY ET AL: "Multiclass Spinal Cord Tumor Segmentation on MRI with Deep Learning", ARXIV.ORG, CORNELL UNIVERSITY LIBRARY, 201 OLIN LIBRARY CORNELL UNIVERSITY ITHACA, NY 14853, 23 December 2020 (2020-12-23), XP081901521

## Description

### FIELD

The embodiments discussed herein are related to a method for processing a medical image.

### BACKGROUND

Medical practice using a three-dimensional image such as a computed tomography (CT) image or a magnetic resonance imaging (MRI) image has been widespread. In addition, in order to reduce the burden on a doctor, diagnosis support has been put into practical use in which whether a lesion is present is determined and the position of the lesion is specified by processing a medical image using a computer and the result is provided to the doctor. Note that a method for processing a medical image using a computer is described in, for example, US Patent Publication No. 2010/0183211, US Patent No. 6366797, Japanese National Publication of International Patent Application No. 2013-504341, and Japanese National Publication of International Patent Application No. 2008-503294.

Further, "Fast brain tumour segmentation using optimized U-Net and adaptive thresholding" by Isunuri Bala Venkateswarlu et al. discusses an optimized U-Net model with post-processing for fast brain tumour segmentation.

A method for detecting a tumor, which is a kind of lesion, by image processing has been put into practical use. However, in a case where a part of an organ is removed by a surgical operation or the like and a cavity is present in the organ, it may be difficult to detect a tumor.

It is an object in one aspect of the present invention to accurately detect a tumor from image data obtained by capturing an image of an organ.

### SUMMARY

The present invention is defined by the independent claims. Preferred embodiments are defined by the dependent claims. Further aspects are provided for facilitating the understanding of the invention.

### BRIEF DESCRIPTION OF DRAWINGS

FIGS. 1A to 1C illustrate an example of a method for detecting a tumor;
FIG. 2 is a diagram for explaining a partial volume effect;
FIGS. 3A and 3B are diagrams for explaining a method for suppressing erroneous detection of a tumor;
FIG. 4 illustrates an example of an image processing device according to an embodiment of the present invention;
FIG. 5 is a flowchart illustrating an example of an image processing method according to the embodiment of the present invention;
FIGS. 6A to 6C illustrate an example of image data, an organ region, and a tumor candidate region;
FIGS. 7A to 7C illustrate an example of a non-organ region, an erroneously detected region, and a tumor candidate region remaining without being removed;
FIG. 8 is a flowchart illustrating an example of a process for generating a non-organ region;
FIGS. 9A and 9B are diagrams for explaining a method for determining a threshold value for binarizing image data;
FIG. 10 illustrates an example of binarization of image data;
FIG. 11 illustrates an example of expansion processing on an image representing an organ;
FIG. 12 illustrates an example of a process for generating a non-organ image based on a binarized image and an expanded organ region;
FIG. 13 is a flowchart illustrating an example of a process for specifying an erroneously detected region;
FIG. 14 illustrates an example of a procedure for extracting a contour of a non-organ region;
FIG. 15 illustrates an example of a tumor candidate region;
FIGS. 16A and 16B illustrate an example of a method for determining whether a tumor candidate region is an erroneously-extracted region; and
FIG. 17 illustrates an example of a hardware configuration of the image processing device.

### DESCRIPTION OF EMBODIMENTS

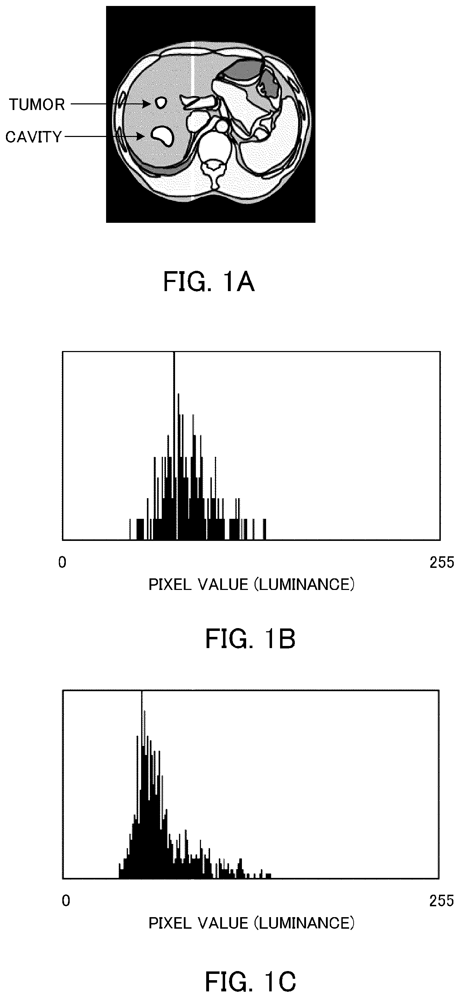

FIGS. 1A to 1C illustrate an example of a method for detecting a tumor. In this example, a tumor is detected using pixel values of a three-dimensional medical image. It is assumed that the three-dimensional medical image is obtained by CT or MRI. In this example, the pixel value represents the luminance of a pixel in the image. An organ to be diagnosed is not particularly limited, but is, for example, a liver. In this example, as illustrated in FIG. 1A, the tumor and a cavity are present in the organ. The tumor is a swelling grown in deformation of the organ (mainly liver). The cavity is formed, for example, by removing a part of the organ by surgery.

An image processing device analyzes a pixel value of each pixel of image data obtained by capturing an image of the organ. In this case, in the medical image, image regions corresponding to the organ, the tumor, and the cavity have respective characteristic pixel values. Specifically, the pixel value in the image region corresponding to the organ is large (that is, the luminance of the image region is high). In addition, the pixel value in the image region corresponding to the cavity is small (that is, the luminance of the image region is low). The pixel value in the image region corresponding to the tumor is smaller than the pixel value corresponding to the organ but larger than the pixel value corresponding to the cavity. Therefore, the tumor in the organ can be detected by analyzing the pixel value of each pixel of the medical image.

For example, FIG. 1B illustrates a histogram of pixel values of the image region corresponding to the tumor. Therefore, when a histogram as illustrated in FIG. 1B is obtained in a certain region in the medical image, the image processing device estimates that the tumor is present in that region.

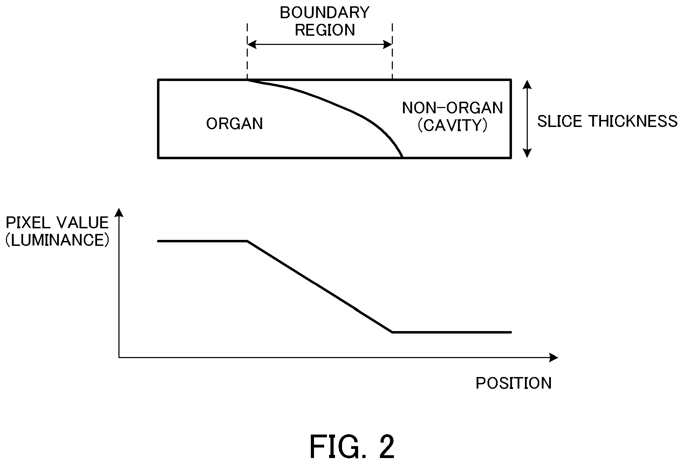

However, when the cavity is present in the organ, a region in which the pixel value gradually changes due to the partial volume effect appears at a boundary between the organ and the cavity. For example, as illustrated in FIG. 2, it is assumed that an organ region and a non-organ region (in this case, a cavity region) are included in one slice of a CT image. In this case, in a boundary region between the organ region and the cavity region, signals of different intensities are averaged in a voxel (pixel × slice thickness), and thus the pixel value gradually changes. Specifically, the pixel value gradually decreases from the organ region toward the cavity region. In the following description, a region where the pixel value gradually changes due to the partial volume effect may be referred to as a "partial volume effect region".

Here, as described above, a pixel value of the tumor region is smaller than a pixel value of the organ region and larger than a pixel value of the cavity region. Therefore, a pixel value of the boundary region between the organ region and the cavity region may be substantially the same as the pixel value of the tumor region. For example, FIG. 1C illustrates a histogram of pixel values of the partial volume effect region appearing between the organ region and the cavity region. However, this histogram is similar to the histogram of the tumor illustrated in FIG. 1B. Therefore, the image processing device may not be able to identify the tumor region and the partial volume effect region. That is, when the cavity is present in the organ, the partial volume effect region appearing between the organ region and the cavity region may be erroneously extracted as a tumor region. Therefore, only by extracting a tumor candidate by a known technique, a doctor needs to identify an image corresponding to the actual tumor and an image caused by the partial volume effect. Therefore, an image processing device according to an embodiment of the present invention has a function of accurately detecting a tumor even when a cavity is present in the organ.

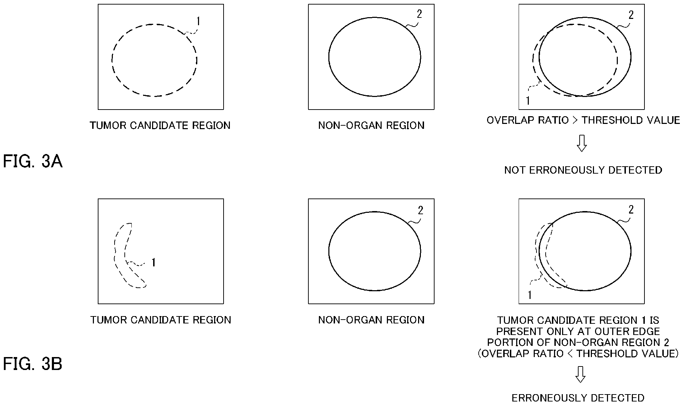

FIGS. 3A and 3B are diagrams for explaining a method for suppressing erroneous detection of a tumor. In the following description, an organ region indicates a region corresponding to the organ to be diagnosed in a medical image. A tumor candidate region indicates a region having a characteristic of the tumor in the medical image. Therefore, the tumor candidate region extracted by the image processing device may include a region (for example, the partial volume effect region described above) not corresponding to the tumor. A non-organ region indicates a region that does not correspond to the organ to be diagnosed in the medical image. A cavity region indicates a region corresponding to the cavity in the organ to be diagnosed in the medical image.

The image processing device according to the embodiment of the present invention extracts a tumor candidate region 1 from a medical image such as a CT image. The tumor candidate region can be extracted by a known technique. For example, the tumor candidate region can be extracted from the medical image by a segmentation technique such as U-Net. Note that the following document written by Yang Zhang, et al. describes a method for extracting a lesion region such as a tumor region from an unknown medical image using U-Net.
Yang Zhang, et.al, Automatic Breast and Fibroglandular Tissue Segmentation in Breast MRI Using Deep Learning by a Fully-Convolutional Residual Neural Network U-Net, Academic Radiology 26(11), pp. 1526-1535 (2019)

In addition, the image processing device extracts a non-organ region 2 from the medical image. The non-organ region is extracted based on, for example, a pixel value. In this example, the organ region has a larger pixel value than those in other regions. Therefore, the non-organ region can be extracted by detecting a pixel having a pixel value smaller than a specified threshold value in the medical image. The non-organ region includes the tumor candidate region and the cavity region.

Then, the image processing device superimposes the tumor candidate region 1 and the non-organ region 2 while performing alignment. When a tumor is actually present in the organ to be diagnosed, the tumor is extracted as the tumor candidate region 1 and is also extracted as the non-organ region 2. In this case, as illustrated in FIG. 3A, the shape of the tumor candidate region 1 and the shape of the non-organ region 2 are similar to each other, and the tumor candidate region 1 and the non-organ region 2 are extracted from substantially the same position. Therefore, when the tumor candidate region 1 and the non-organ region 2 are superimposed on each other, all or most of the tumor candidate region 1 overlaps the non-organ region 2. That is, the ratio of the area (or volume) of the overlapping region where the tumor candidate region 1 and the non-organ region 2 overlap each other to the area (or volume) of the non-organ region 2 is high. Therefore, when the ratio of the area of the overlapping region to the area of the non-organ region 2 is higher than a specified threshold value, the image processing device estimates that the tumor candidate region 1 corresponds to the tumor. Note that the area of each of the regions is represented by, for example, the number of pixels in the region.

On the other hand, for example, when the non-organ region 2 represents the cavity in the organ, and the boundary region (that is, the partial volume effect region) between the organ region and the cavity region is extracted as a tumor candidate region, the tumor candidate region 1 appears only at an outer edge portion of the non-organ region 2 as illustrated in FIG. 3B. Therefore, when the tumor candidate region 1 appears only at the outer edge portion of the non-organ region 2, the image processing device determines that the tumor candidate region 1 does not correspond to the tumor. That is, the tumor candidate region 1 is determined to be an erroneously-extracted tumor candidate region. Note that "only at the outer edge portion of the non-organ region 2" indicates that the region does not include a region close to the center of the non-organ region 2 and that the region is not far away from the outer edge of the non-organ region 2.

In this case, as illustrated in FIG. 3B, the shape of the tumor candidate region 1 and the shape of the non-organ region 2 are greatly different from each other. Therefore, when the tumor candidate region 1 and the non-organ region 2 are superimposed on each other, the ratio of the area of the overlapping region to the area of the non-organ region 2 is low. Therefore, when the ratio of the area of the overlapping region to the area of the non-organ region 2 is lower than the specified threshold value, the image processing device determines that the tumor candidate region 1 does not correspond to the tumor.

As described above, according to the embodiment of the present invention, the boundary region (that is, the partial volume effect region) between the organ region and the cavity region can be identified from the tumor candidate region obtained by the image processing. That is, even when the partial volume effect region is extracted as the tumor candidate region, the partial volume effect region can be removed from the extracted tumor candidate region. Therefore, erroneous detection of the tumor is suppressed, and the burden on the doctor is reduced.

The tumor basically appears in the vicinity of a large artery (for example, the hepatic artery in the liver). That is, a tumor rarely appears on the outer surface part of the organ. Therefore, in the following, a method for detecting a tumor appearing in the organ will be described.

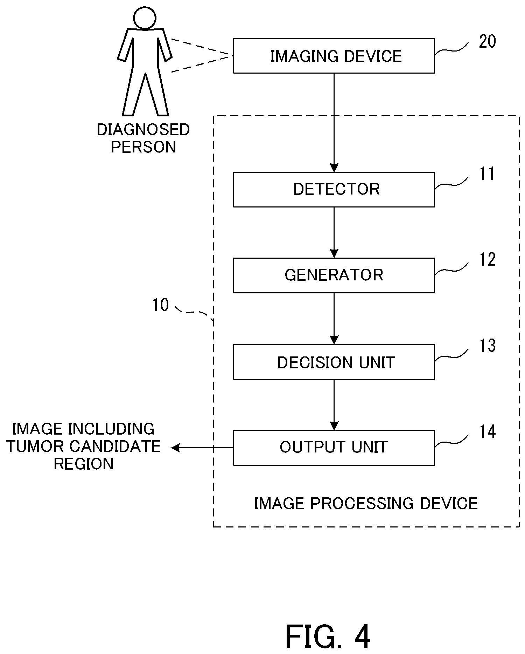

FIG. 4 illustrates an example of the image processing device according to the embodiment of the present invention. An image processing device 10 according to the embodiment of the present invention includes a detector 11, a generator 12, a decision unit 13, and an output unit 14, and processes an image captured by an imaging device 20. Note that the image processing device 10 may have other functions not illustrated in FIG. 4.

The imaging device 20 generates image data of a diagnosed person by capturing an image of the diagnosed person. The imaging device 20 is, for example, a CT imaging device. In this case, the imaging device 20 acquires a plurality of cross-sectional images (alternatively, a plurality of slices) by using radiation or the like to scan the organ to be diagnosed. That is, the imaging device 20 generates three-dimensional image data including the organ to be diagnosed. However, the imaging device 20 is not limited to the CT imaging device, and may be, for example, an MRI imaging device.

The detector 11 extracts an organ region corresponding to the organ to be diagnosed and a tumor candidate region having a feature for identifying a tumor in the organ from the image data obtained by the imaging device 20. As described above, the organ region and the tumor candidate region are extracted from the image data by a known technique. As an example, the detector 11 extracts the organ region and the tumor candidate region from the image data by a segmentation technique such as U-Net.

The generator 12 generates a non-organ region representing a region where no target organ is present, based on the organ region extracted by the detector 11. When a tumor is present in the target organ, a region corresponding to the tumor is detected as a non-organ region. When a cavity is present in the target organ, a region corresponding to the cavity is also detected as a non-organ region.

The decision unit 13 determines whether or not the tumor candidate region extracted by the detector 11 corresponds to the tumor in the target organ. That is, the decision unit 13 determines whether or not the tumor candidate region extracted by the detector 11 is an erroneously detected region. In this case, for example, as described with reference to FIGS. 3A and 3B, the decision unit 13 determines whether or not the tumor candidate region is an erroneously detected region, based on the ratio of the tumor candidate region overlapping the non-organ region to the non-organ region. When the tumor candidate region is an erroneously detected region, the decision unit 13 may remove an image corresponding to the tumor candidate region from the image data. In the following description, the ratio of a corresponding tumor candidate region overlapping a certain non-region to the certain non-organ region may be referred to as an "overlap ratio". In addition, an erroneously detected region indicates a region that has been extracted as a tumor candidate region even though the region is an image region that does not correspond to a tumor.

The output unit 14 outputs the image data from which the image corresponding to the erroneously detected region has been removed. During this process, the output unit 14 may highlight a tumor candidate region that has not been removed when displaying a medical image. As described above, according to the embodiment of the present invention, a tumor candidate region estimated not to correspond to the tumor is removed from tumor candidate regions obtained by the image processing. Therefore, by using the image processing device 10 according to the embodiment of the present invention, the burden on the doctor at the time of diagnosing whether a tumor is present is reduced.

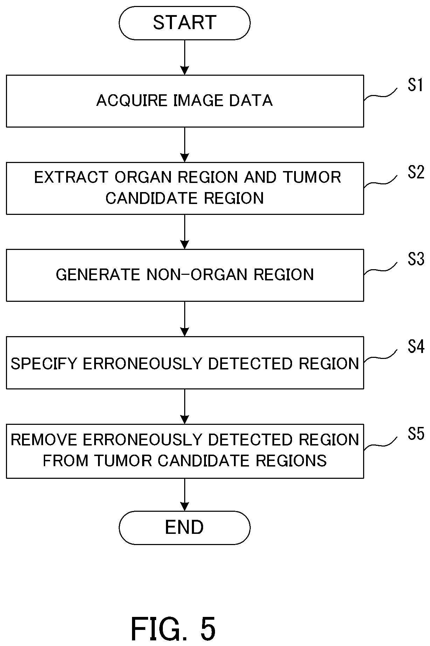

FIG. 5 is a flowchart illustrating an example of an image processing method according to the embodiment of the present invention. The processes in this flowchart are performed by the image processing device 10 illustrated in FIG. 4.

In S1, the image processing device 10 acquires image data obtained by capturing an image of the organ of the diagnosed person. The image data is provided from the imaging device 20 to the image processing device 10 illustrated in FIG. 4. Alternatively, when the image data obtained by the imaging device 20 is stored in a storage device (not illustrated), the image processing device 10 obtains the image data from the storage device.

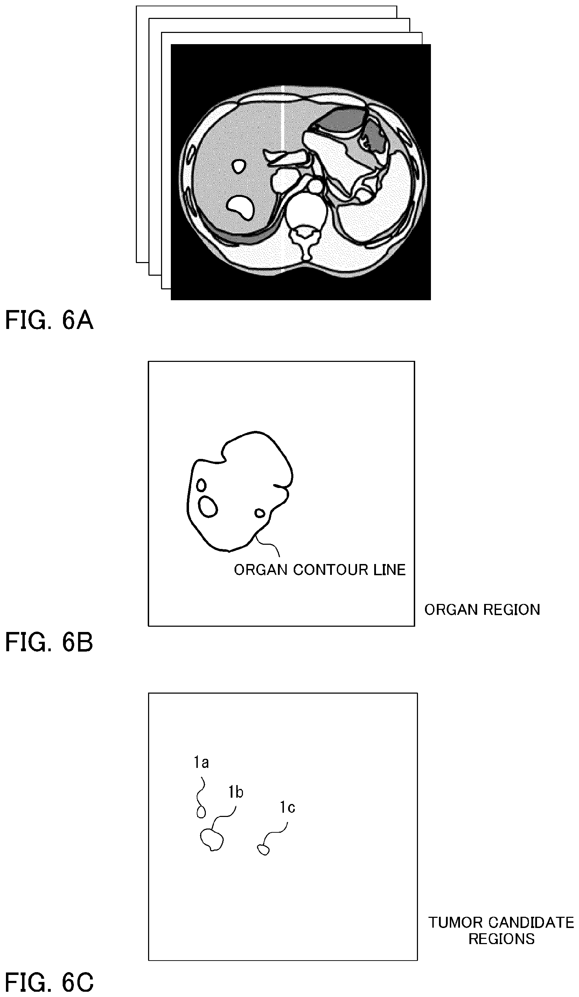

In S2, the detector 11 extracts an organ region corresponding to the organ to be diagnosed and a tumor candidate region having a feature for identifying the tumor in the organ from the image data acquired by the image processing device 10. In this example, it is assumed that the image processing device 10 acquires image data illustrated in FIG. 6A. As described above, the image data includes a plurality of slices. Then, an organ region illustrated in FIG. 6B and a tumor candidate region illustrated in FIG. 6C are extracted by a known segmentation technique such as U-Net. In this case, the detector 11 may extract the tumor candidate region by detecting a pixel having a pixel value within a specified range. In this case, the feature for identifying the tumor is a pixel value within the specified range. In the example illustrated in FIG. 6B, a region inside an organ contour line represents the organ region. However, a region that does not correspond to the organ is present inside the organ contour line. In the example illustrated in FIG. 6C, as a region that does not correspond to the organ, three tumor candidate regions 1a to 1c are extracted.

In S3, the generator 12 generates a non-organ region representing a region where no target organ is present, based on the organ region extracted by the detector 11. At this time, the generator 12 may generate the non-organ region based on the pixel value of each pixel constituting the image data. In this example, each pixel value of the region corresponding to the organ is higher than the pixel values of the other regions. Therefore, the generator 12 can generate the non-organ region by detecting a pixel having a pixel value lower than the specified threshold value. In this case, as will be described later, the threshold value may be determined based on a distribution of the pixel value of each pixel in the organ region.

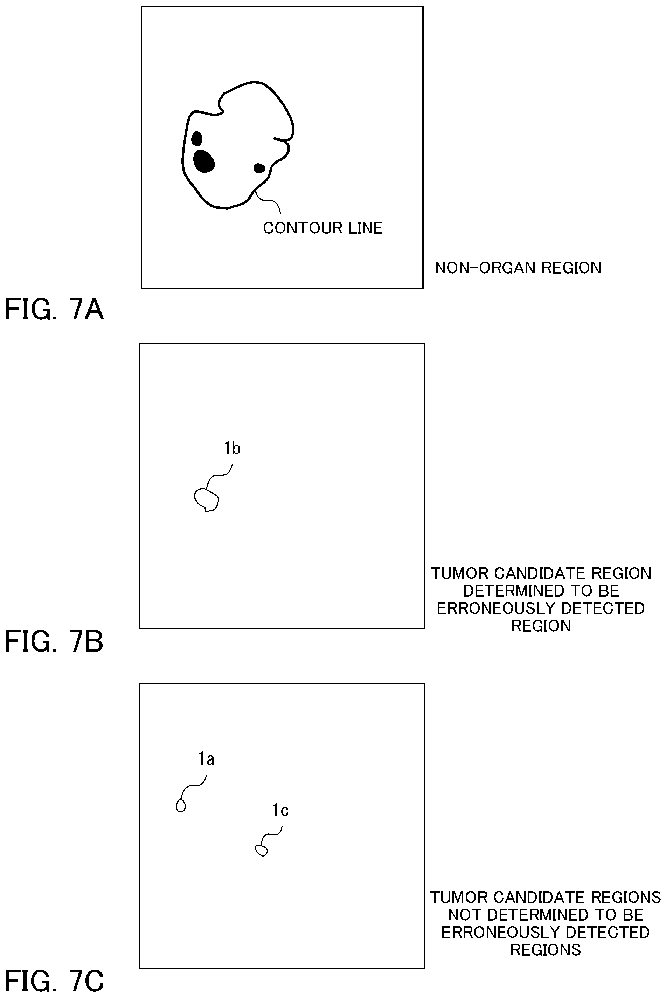

FIG. 7A illustrates an example of the non-organ region generated by the generator 12. In FIG. 7A, each of black regions corresponds to a non-organ region. A region outside a contour line also corresponds to the non-organ region. Note that the generator 12 generates a non-organ region on each of an axial plane, a sagittal plane, and a coronal plane. As a result, a three-dimensional non-organ region is generated.

In S4, the decision unit 13 uses the non-organ region generated by the generator 12 to determine whether each tumor candidate region extracted by the detector 11 corresponds to the tumor in the target organ. That is, the decision unit 13 determines whether or not each tumor candidate region is an erroneously detected region. The erroneously detected region indicates a region that was extracted as a tumor candidate region but is not a region corresponding to the tumor. In the example illustrated in FIG. 7B, the tumor candidate region 1b is determined to be an erroneously detected region among the three tumor candidate regions 1a to 1c illustrated in FIG. 6C.

When the erroneously detected region is found, the decision unit 13 removes the erroneously detected region from the tumor candidate regions extracted by the detector 11. In the example, the tumor candidate region 1b is removed from the tumor candidate regions 1a to 1c illustrated in FIG. 6C. As a result, as illustrated in FIG. 7C, the tumor candidate regions 1a and 1c remain.

Thereafter, the output unit 14 outputs an image for identifying the tumor candidate regions remaining without being removed. In this case, the output unit 14 may highlight the tumor candidate regions that have not been removed in the image representing the organ of the diagnosed person. As described above, according to the image processing method according to the embodiment of the present invention, the erroneously detected tumor candidate region is removed from the tumor candidate regions detected by the known technique. That is, it is possible to specify a tumor candidate region that is likely to correspond to the tumor. Therefore, the burden on the doctor at the time of diagnosing whether a tumor is present is reduced.

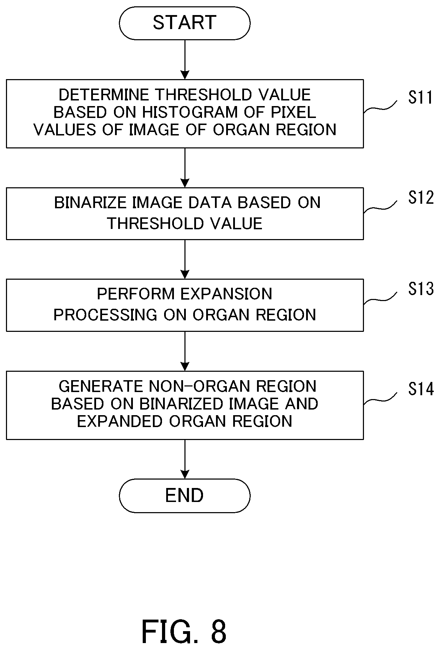

FIG. 8 is a flowchart illustrating an example of a process for generating a non-organ region. The processes of this flowchart correspond to S3 illustrated in FIG. 5.

In S11, the generator 12 determines a threshold value for binarizing the image data. As an example, the generator 12 determines the threshold value based on a histogram of pixel values of an image in the organ region. Here, the organ region is extracted in S2 illustrated in FIG. 5. The generator 12 acquires a pixel value of each pixel in the organ region and creates the histogram. Then, the generator 12 determines the threshold value based on the histogram.

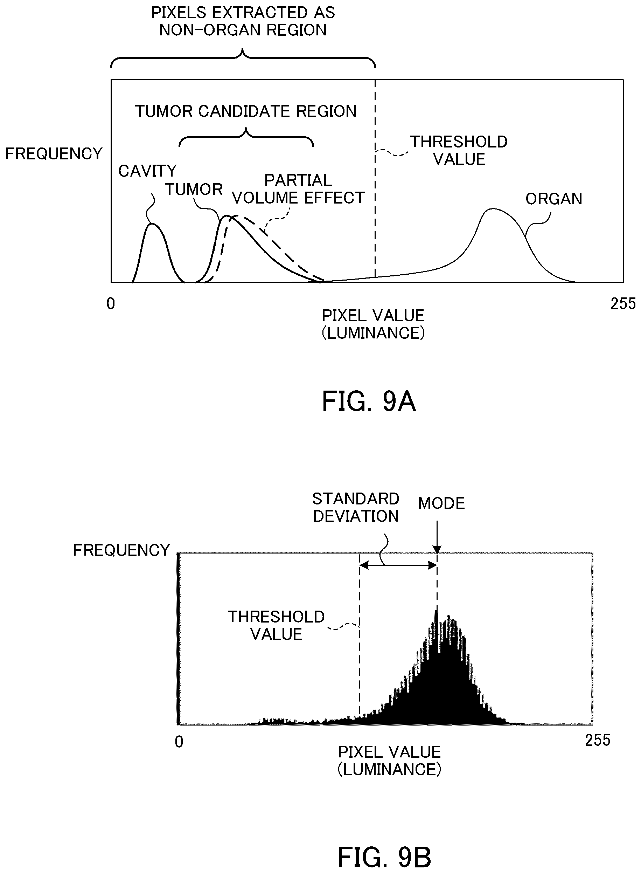

FIGS. 9A and 9B are diagrams for explaining a method for determining the threshold value for binarizing the image data. In FIGS. 9A and 9B, the horizontal axis represents the pixel value (that is, luminance) of the image data. The vertical axis represents the number of detected pixels or the frequency at which pixels are detected.

For example, as illustrated in FIG. 9A, the threshold value for the binarization is determined such that the pixel values of most pixels in the organ region are higher than the threshold value. However, this threshold value is determined to be higher than an upper limit of pixel values in a region corresponding to the tumor and an upper limit of pixel values in a region where the partial volume effect occurs. Alternatively, the threshold value is a pixel value between the range of pixel values corresponding to the organ and the range of pixel values corresponding to the tumor. That is, when the image data is binarized using this threshold value, the threshold value is determined such that the organ region is not substantially detected and that the tumor candidate region, the cavity region, and the like are detected.

Such a threshold value can be determined using, for example, a histogram of pixel values of an image in the organ region. For example, as illustrated in FIG. 9B, the generator 12 determines the threshold value based on the mode and the standard deviation of the histogram. As an example, the threshold value is obtained by subtracting the standard deviation from the mode. In this example, the most frequent pixel value (that is, the mode) is "159". The standard deviation of the histogram is "50". Therefore, the threshold value is "109".

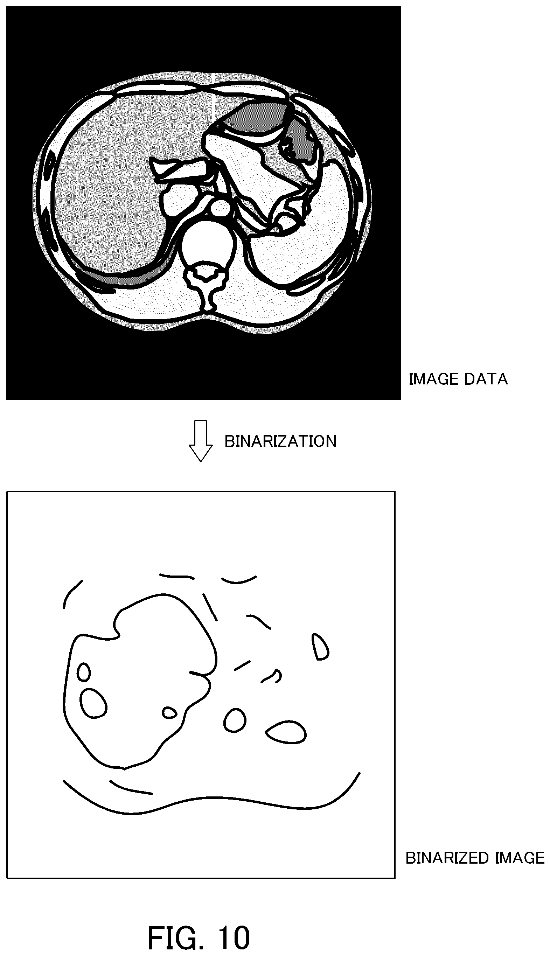

In S12, the generator 12 binarizes the image data acquired by the image processing device 10 using the threshold value determined in S11. For example, the image data is binarized by giving "1" to a pixel having a pixel value larger than the threshold value and giving "0" to a pixel having a pixel value smaller than the threshold value. FIG. 10 illustrates an example of the binarization of the image data. Noise (fine pattern and thin pattern) may appear in the binarized image data. In the following description, the binarized image data may be referred to as a "binarized image".

When the image data is binarized with the threshold value determined as described above, most pixels in the organ region are set to "1". In this case, some pixels in the organ region may be set to "0". However, when the organ to be diagnosed is the liver, at least a region corresponding to the liver parenchyma is considered to be set to "1".

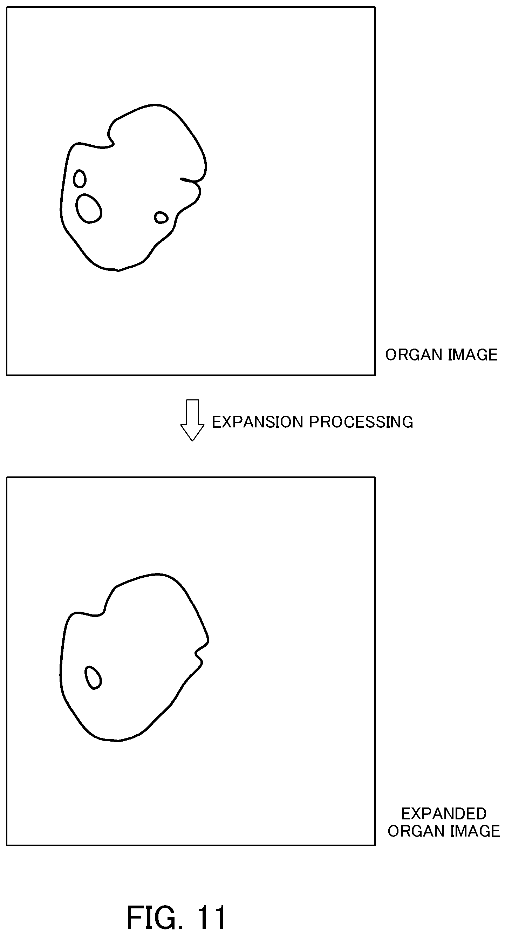

In S13, the generator 12 performs expansion processing on the organ region. In this case, the generator 12 performs the expansion processing using, for example, a kernel of 15×15 pixels in which values of all elements are "1". FIG. 11 illustrates an example of the expansion processing. In the following description, the organ region obtained by the expansion processing in S13 may be referred to as an "expanded organ region".

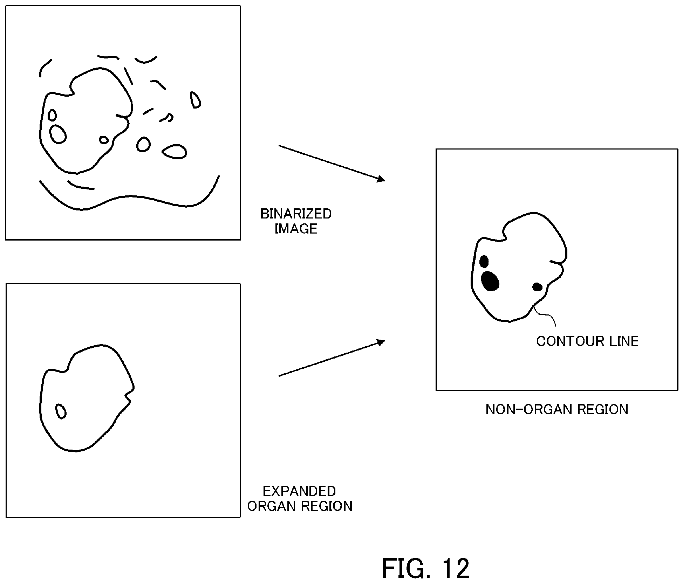

In S14, the generator 12 generates a non-organ image based on the binarized image obtained in S12 and the expanded organ region obtained in S13. For example, the generator 12 detects the outer peripheral line of the expanded organ region and superimposes the outer peripheral line on the binarized image. As illustrated in FIG. 12, the generator 12 sets the value of each pixel outside the outer peripheral line of the expanded organ region to "0" in the binarized image. In addition, the generator 12 may remove a small pattern or a fine pattern by opening processing. The opening processing is implemented using, for example, a kernel of 5×5 pixels in which values of all elements are "1". Then, a non-organ region is obtained by detecting pixels having values of "0" and remaining inside the outer peripheral line of the expanded organ region. In the example illustrated in FIG. 12, each of black regions remaining inside the outer peripheral line of the expanded organ region is detected as a non-organ region. The non-organ region indicates a region that is obviously not the target organ. However, the non-organ region does not indicate a region that does not completely include a pixel corresponding to the organ, but indicates a region that does not substantially include a pixel corresponding to the organ. For example, when the organ to be diagnosed is the liver, the non-organ region indicates a region that is obviously not the liver parenchyma.

In this example, the expansion processing is performed on the organ region, and the non-organ region is generated based on the binarized image and the expanded organ image. However, the embodiment of the present invention is not limited to this procedure. The image processing method according to the embodiment of the present invention may generate the non-organ region based on the binarized image and the organ image without performing the expansion processing on the organ region.

The generator 12 performs the processing of the flowchart illustrated in FIG. 8 on each of the axial plane, the sagittal plane, and the coronal plane in the above-described manner. Alternatively, the generator 12 may perform the processing of the flowchart illustrated in FIG. 8 for each slice. As a result, a three-dimensional non-organ region is generated.

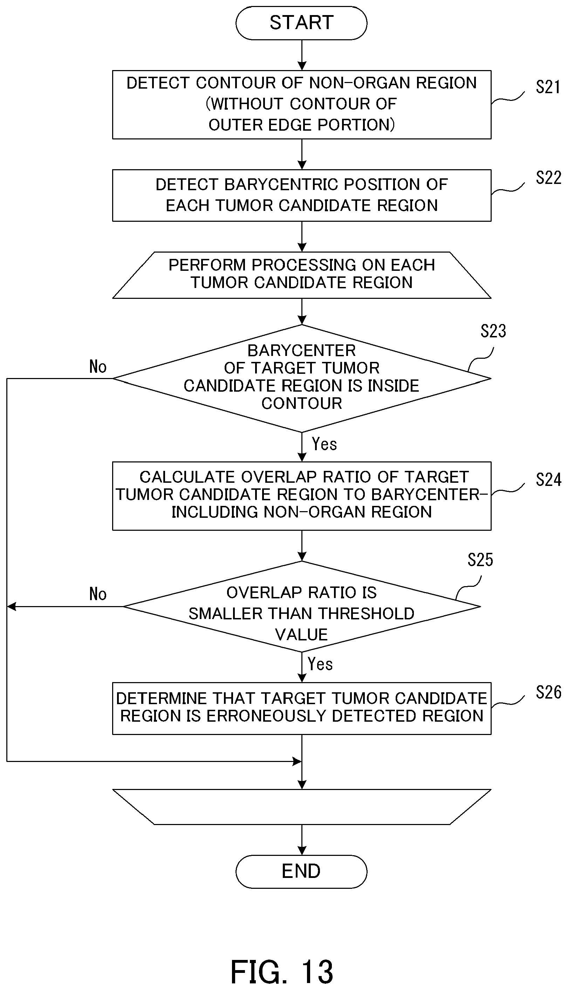

FIG. 13 is a flowchart illustrating an example of a process for specifying an erroneously detected region. This flowchart corresponds to S4 illustrated in FIG. 5.

In S21, the decision unit 13 detects the contour of the non-organ region generated by the generator 12. However, the decision unit 13 does not detect the outermost contour. That is, the decision unit 13 does not detect a contour representing a boundary between the outer edge of the organ region and the non-organ region. As a result, the contour of the non-organ region located in the organ region is detected. The non-organ region located in the organ region corresponds to the tumor, the cavity, or the like.

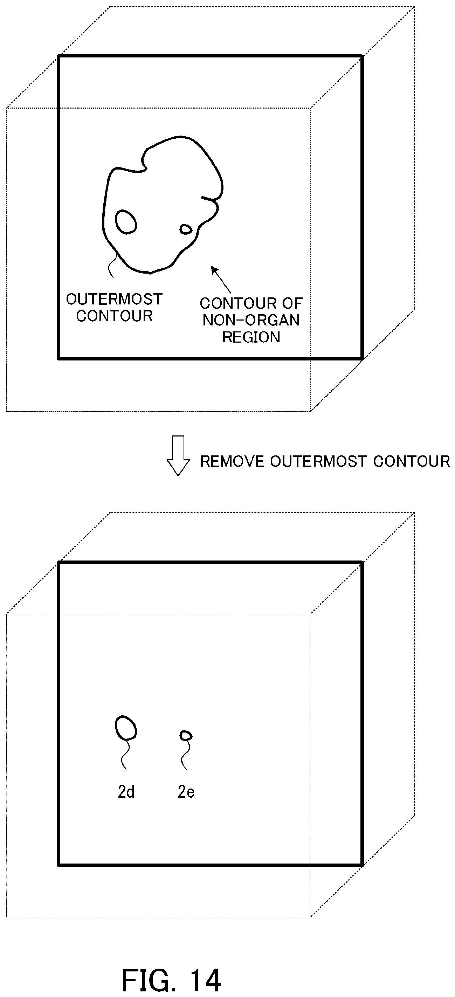

For example, it is assumed that the contour of a non-organ region illustrated in FIG. 14 is detected. In this case, by removing the outermost contour, the contour of a non-organ region 2d and the contour of a non-organ region 2e are obtained. In FIG. 14, the contour of a non-organ region cut along one plane (for example, one of the axial plane, the sagittal plane, or the coronal plane) is drawn.

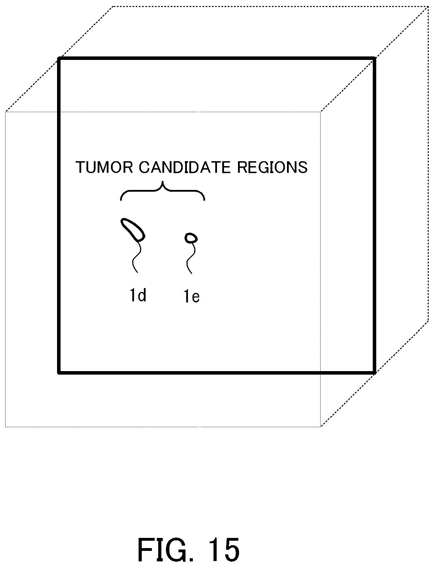

In S22, the decision unit 13 detects the barycentric position of each of tumor candidate regions extracted by the detector 11. That is, three-dimensional coordinates representing the barycentric position of each of the tumor candidate regions are calculated. In this example, as illustrated in FIG. 15, two tumor candidate regions 1d and 1e are obtained. In this case, barycentric coordinates (Xd, Yd, Zd) of the tumor candidate region 1d and barycentric coordinates (Xe, Ye, Ze) of the tumor candidate region 1e are calculated.

The decision unit 13 performs processes of S23 to S26 on each of the tumor candidate regions. That is, the decision unit 13 sequentially selects the tumor candidate regions one by one and performs the processes of S23 to S26 on each of the tumor candidate regions. In the following description, a tumor candidate region on which the processes of S23 to S26 is performed may be referred to as a "target tumor candidate region".

In S23, the decision unit 13 determines whether or not a non-organ region including the barycenter of the target tumor candidate region is present. That is, it is determined whether the barycenter of the target tumor candidate region is located inside the contour of any non-organ region. In the following description, a non-organ region including the barycenter of the target tumor candidate region may be referred to as a "barycenter-including non-organ region". Then, when a non-organ region including the barycenter of the target tumor candidate region is not present (that is, when no barycenter-including non-organ region is found), the processing performed on the target tumor candidate region ends.

When a non-organ region including the barycenter of the target tumor candidate region is present (that is, when the barycenter-including non-organ region is found), the decision unit 13 calculates an overlap ratio of the target tumor candidate region to the barycenter-including non-organ region in S24. That is, the decision unit 13 calculates the ratio of the target tumor candidate region overlapping the barycenter-including non-organ region to the barycenter-including non-organ region. The overlap ratio is calculated on each of the axial plane, the sagittal plane, and the coronal plane.

In S25, the decision unit 13 compares the ratios (that is, the overlap ratios) calculated in S24 with a specified threshold value. In this case, the decision unit 13 compares the overlap ratio with the threshold value in each of the axial plane, the sagittal plane, and the coronal plane. Then, when the overlap ratios are larger than the threshold value in all the planes, the processing performed on the target tumor candidate region ends. On the other hand, when the overlap ratio is smaller than the threshold value in one or more of the planes, the decision unit 13 determines that the target tumor candidate region is an erroneously detected region in S26.

The decision unit 13 performs the processes of S23 to S26 on each tumor candidate region. That is, it is determined whether or not each tumor candidate region is an erroneously detected region. Then, the decision unit 13 outputs information identifying a tumor candidate region determined to be an erroneously detected region.

Thereafter, the image processing device 10 performs the process of S5 illustrated in FIG. 5. That is, the image processing device 10 removes the tumor candidate region determined to be an erroneously detected region from the tumor candidate regions extracted by the detector 11. Then, the image processing device 10 outputs information identifying a tumor candidate region remaining without being removed. In this case, the image processing device 10 may highlight and display the remaining tumor candidate region in the image representing the organ of the diagnosed person.

An example of a procedure for determining whether or not to remove a tumor candidate region will be described. It is assumed that the non-organ regions 2d and 2e illustrated in FIG. 14 are generated and that the tumor candidate regions 1d and 1e illustrated in FIG. 15 are extracted. In addition, the barycentric position of each of the tumor candidate regions 1d and 1e is calculated.

When the tumor candidate region 1d is selected as the target tumor candidate region, the image processing device 10 searches for a non-organ region including the barycenter of the tumor candidate region 1d. In this example, the non-organ region 2d includes the barycenter of the tumor candidate region 1d. That is, the barycenter of the tumor candidate region 1d is located inside the contour of the non-organ region 2d. In this case, the image processing device 10 calculates the overlap ratio of the tumor candidate region 1d to the non-organ region 2d. Specifically, the ratio of the tumor candidate region 1d overlapping the non-organ region 2d to the non-organ region 2d on each of the axial plane, the sagittal plane, and the coronal plane is calculated.

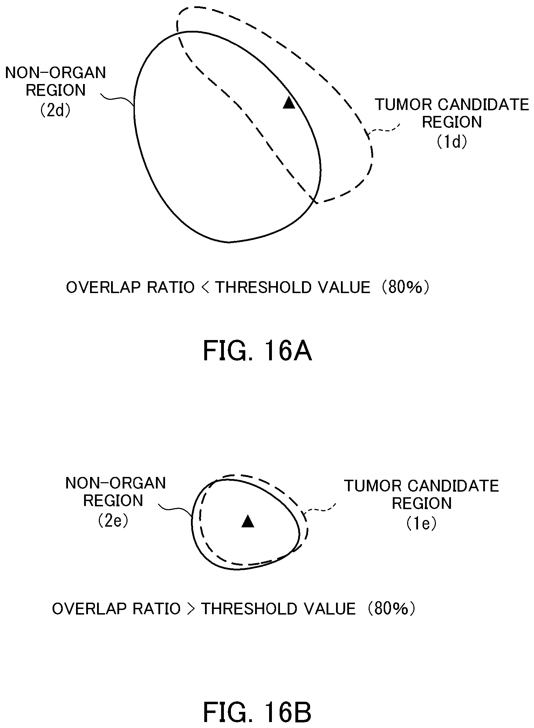

In the example illustrated in FIG. 16A, the ratio of the tumor candidate region 1d overlapping the non-organ region 2d to the non-organ region 2d on one (for example, the axial plane) of the axial plane, the sagittal plane, and the coronal plane is calculated. A triangular symbol illustrated in FIG. 16A represents the barycenter of the tumor candidate region 1d. The image processing device 10 counts the number of pixels belonging to the non-organ region 2d. In addition, the image processing device 10 counts the number of pixels belonging to a region where the non-organ region 2d and the tumor candidate region 1d overlap with each other. Then, the "number of pixels in the overlapping region" is divided by the "number of pixels in the non-organ region 2d" to calculate the overlap ratio of the tumor candidate region 1d to the non-organ region 2d. In this example, it is assumed that "30 percent" is obtained as the overlap ratio.

The image processing device 10 similarly calculates the overlap ratio on each of the sagittal plane and the coronal plane. As a result, it is assumed that "2 percent" and "3 percent" are respectively obtained as the overlap ratios. Then, the image processing device 10 compares the overlap ratio calculated for each plane with a specified threshold value. In this example, the threshold value is 80 percent. In this case, the overlap ratios are smaller than the threshold value in all the surfaces. Therefore, the image processing device 10 determines that the tumor candidate region 1d is an erroneously detected region. In this case, as described above, the boundary region between the organ and the cavity has a pixel value approximate to a pixel value of the tumor region due to the partial volume effect. Then, in FIGS. 14, 15, and 16A, the non-organ region 2d is considered to correspond to, for example, the cavity in the organ. In addition, the tumor candidate region 1d is considered to correspond to, for example, the boundary region (that is, the partial volume effect region) between the organ and the cavity.

When the tumor candidate region 1e is selected as the target tumor candidate region, the image processing device 10 searches for a non-organ region including the barycenter of the tumor candidate region 1e. In this example, the non-organ region 2e includes the barycenter of the tumor candidate region 1e. In this case, the image processing device 10 calculates the overlap ratio of the tumor candidate region 1e to the non-organ region 2e.

In the example illustrated in FIG. 16B, the ratio of the tumor candidate region 1e overlapping the non-organ region 2e to the non-organ region 2e is calculated. The image processing device 10 counts the number of pixels belonging to the non-organ region 2e. In addition, the image processing device 10 counts the number of pixels belonging to a region where the non-organ region 2e and the tumor candidate region 1e overlap with each other. Then, based on the numbers of pixels, the overlap ratio of the tumor candidate region 1e to the non-organ region 2e is calculated. In this example, it is assumed that the "overlap ratio = 90 percent" is obtained on the axial plane.

The image processing device 10 similarly calculates the overlap ratio on each of the sagittal plane and the coronal plane. Then, the image processing device 10 compares the overlap ratio calculated for each plane with the specified threshold value. In this example, it is assumed that the overlap ratios are larger than the threshold value in all the planes. Therefore, the image processing device 10 determines that the tumor candidate region 1e is not an erroneously detected region. That is, in FIGS. 14, 15, and 16B, it is considered that the tumor candidate region 1e and the non-organ region 2e appear due to the same tumor.

When the threshold value for specifying an erroneously detected region is too high, there is a possibility that a tumor candidate region corresponding to the actual tumor is determined to be an erroneously detected region. On the other hand, when the threshold value is too low, there is a possibility that a tumor candidate region caused by the cavity or the like in the organ cannot be removed. When a tumor is actually present in the organ to be diagnosed, the tumor is extracted as a tumor candidate region and is also extracted as a non-organ region. In this case, the tumor candidate region corresponding to this tumor, and the non-organ region are substantially the same. That is, it is considered that the overlap ratio of the tumor candidate region to the non-organ region is sufficiently high and close to 100 percent. On the other hand, when a cavity is present in the organ, the cavity is extracted as a non-organ region, and a boundary region between the organ and the cavity is extracted as a tumor candidate region. In this case, the overlap ratio of the tumor candidate region to the non-organ region is rarely high. Therefore, it is preferable to appropriately determine the threshold value for specifying an erroneously detected region in consideration of these factors. In the above-described example, the threshold value is set to 80 percent in consideration of these factors.

As described above, according to the image processing method according to the embodiment of the present invention, the tumor candidate region caused by the partial volume effect can be removed from the tumor candidate regions detected by the known technique. That is, the tumor candidate region that is less likely to correspond to the tumor can be removed from the tumor candidate regions. Therefore, the burden on the doctor at the time of diagnosing whether a tumor is present is reduced.

In the flowchart illustrated in FIG. 13, when the barycenter of the target tumor candidate region is inside the contour of the non-organ region and the overlap ratio of the target tumor candidate region to the non-organ region is lower than the threshold value, the target tumor candidate region is determined to be an erroneously detected region. That is, when there is no non-organ region including the barycenter of the target tumor candidate region, the target tumor candidate region is not determined to be an erroneously detected region. However, the embodiment of the present invention is not limited to such a case. For example, when a tumor is actually present in the organ, the tumor is extracted as a tumor candidate region and is also extracted as a non-organ region. Therefore, when there is no non-organ region including the barycenter of the target tumor candidate region, it is considered that the target tumor candidate region does not correspond to the tumor. Therefore, when there is no non-organ region including the barycenter of the target tumor candidate region, the image processing device 10 may determine that the target tumor candidate region is an erroneously detected region.

In the above example, the case where the organ to be diagnosed is the liver has been described, but the embodiment of the present invention is not limited to such a case. That is, the image processing method according to the embodiment of the present invention can be applied to diagnosis of any organ. However, in a case where the luminance of the organ is higher than the luminance of the tumor, the luminance of the tumor and the luminance of the partial volume effect region are substantially the same, and the luminance of the tumor (and the partial volume effect region) is higher than the luminance of the cavity in the organ in the image data, the image processing method according to the embodiment of the present invention is particularly useful.

### Hardware Configuration

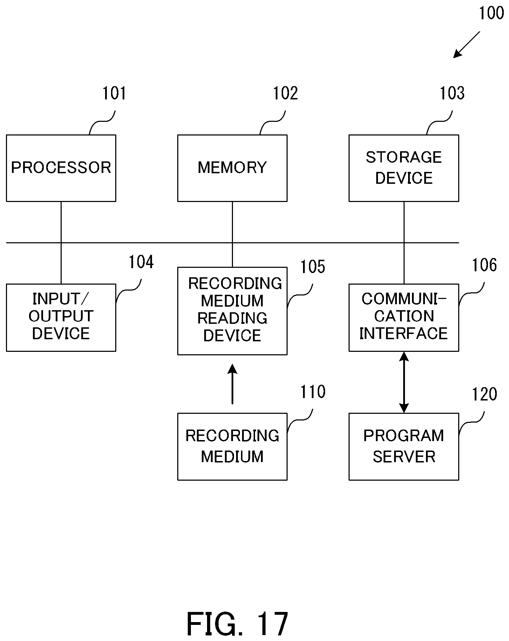

FIG. 17 illustrates an example of a hardware configuration of the image processing device 10. The image processing device 10 is implemented as a computer 100 including a processor 101, a memory 102, a storage device 103, an input/output device 104, a recording medium reading device 105, and a communication interface 106.

The processor 101 controls the operation of the image processing device 10 by executing an image processing program stored in the storage device 103. The image processing program includes program code describing the procedures of the flowcharts illustrated in FIGS. 5, 8, and 13. Therefore, when the processor 101 executes this image processing program, the functions of the detector 11, the generator 12, the decision unit 13, and the output unit 14 illustrated in FIG. 4 are provided. The memory 102 is used as a work area of the processor 101. The storage device 103 stores the above-described image processing program and other programs. Furthermore, the storage device 103 may store the image data generated by the imaging device 20.

The input/output device 104 may include an input device such as a keyboard, a mouse, a touch panel, or a microphone. In addition, the input/output device 104 may include output devices such as a display device and a speaker. The recording medium reading device 105 can acquire data and information recorded in the recording medium 110. The recording medium 110 is a removable recording medium detachable from the computer 100. Furthermore, the recording medium 110 is implemented as, for example, a semiconductor memory, a medium that records a signal by optical mechanism, or a medium that records a signal by magnetic mechanism. Note that the image processing program may be provided from the recording medium 110 to the computer 100. The communication interface 106 provides a function of connecting to a network. When the image processing program is stored in a program server 120, the computer 100 may acquire the image processing program from the program server 120.

## Claims

1. An image processing method executed by a computer, the method comprising:
extracting an organ region representing an organ and a tumor candidate region having a feature for identifying a tumor in the organ from image data obtained by capturing an image of the organ;
generating a non-organ region representing a region where the organ is not present and includes the tumor candidate region and a cavity region within the organ region using the image data; and
removing, from the extracted tumor candidate region, a tumor candidate region being present only at an outer edge portion of the non-organ region in the organ region, the outer edge portion of the non-organ region being a region that does not include a region close to the center of the non-organ region and that is not far away from the outer edge of the non-organ region.

2. The image processing method according to claim 1, wherein
the process of generating the non-organ region includes
binarizing the image data using a threshold value representing a specified pixel value to generate a binarized image in which a pixel having a pixel value higher than the threshold value is represented by a first value and a pixel having a pixel value lower than the threshold value is represented by a second value, and
detecting a pixel represented by the second value in the organ region or an expanded organ region obtained by expanding the organ region in the binarized image to generate the non-organ region.

3. The image processing method according to claim 2, wherein
the threshold value is a pixel value between a range of pixel values corresponding to the organ and a range of pixel values corresponding to the tumor in the image data.

4. The image processing method according to claim 2, wherein
the threshold value is determined based on a histogram of pixel values of pixels belonging to the organ region.

5. The image processing method according to claim 4, wherein
the threshold value is obtained by subtracting a standard deviation of the histogram from a most frequent pixel value in the organ region.

6. An image processing program for causing a processor to execute a process comprising:
extracting an organ region representing an organ and a tumor candidate region having a feature for identifying a tumor in the organ from image data obtained by capturing an image of the organ;
generating a non-organ region representing a region where the organ is not present and includes the tumor candidate region and a cavity region within the organ region using the image data; and
removing, from the extracted tumor candidate region, a tumor candidate region being present only at an outer edge portion of the non-organ region in the organ region, the outer edge portion of the non-organ region being a region that does not include a region close to the center of the non-organ region and that is not far away from the outer edge of the non-organ region.

## Patentansprüche

1. Bildverarbeitungsverfahren, das von einem Computer ausgeführt wird, wobei das Verfahren Folgendes umfasst:
Extrahieren einer Organregion, die ein Organ und eine Tumorkandidatenregion darstellt, die ein Merkmal zum Identifizieren eines Tumors in dem Organ aus Bilddaten aufweist, die durch Aufnehmen eines Bildes des Organs erhalten wurden;
Erzeugen einer Nicht-Organregion, die eine Region darstellt, in der das Organ nicht vorhanden ist, und die Tumorkandidatenregion und eine Hohlraumregion innerhalb der Organregion unter Verwendung der Bilddaten einschließt; und
Entfernen aus der extrahierten Tumorkandidatenregion einer Tumorkandidatenregion, die nur an einem Außenrandabschnitt der Nicht-Organregion in der Organregion vorhanden ist, wobei der Außenrandabschnitt der Nicht-Organregion eine Region ist, die nicht eine Region in der Nähe der Mitte der Nicht-Organregion einschließt, und die nicht weit vom Außenrand der Nicht-Organregion entfernt ist.

2. Bildverarbeitungsverfahren nach Anspruch 1, wobei
der Prozess des Erzeugens der Nicht-Organregion Folgendes einschließt
Binarisieren der Bilddaten unter Verwendung eines Schwellenwerts, der einen konkreten Pixelwert darstellt, um ein binarisiertes Bild zu erzeugen, in dem ein Pixel, das einen höheren Pixelwert als den Schwellenwert aufweist, durch einen ersten Wert dargestellt wird und ein Pixel, das einen niedrigeren Pixelwert als den Schwellenwert aufweist, durch einen zweiten Wert dargestellt wird, und
Erkennen eines Pixels, das durch den zweiten Wert dargestellt wird, in der Organregion oder einer erweiterten Organregion, die durch Erweitern der Organregion in dem binarisierten Bild erhalten wurde, um die Nicht-Organregion zu erzeugen.

3. Bildverarbeitungsverfahren nach Anspruch 2, wobei
der Schwellenwert ein Pixelwert zwischen einem Pixelwertbereich ist, der dem Organ entspricht, und einem Pixelwertbereich, der dem Tumor in den Bilddaten entspricht.

4. Bildverarbeitungsverfahren nach Anspruch 2, wobei
der Schwellenwert basierend auf einem Histogramm von Pixelwerten bestimmt wird, die zu der Organregion gehören.

5. Bildverarbeitungsverfahren nach Anspruch 4, wobei
der Schwellenwert durch Subtrahieren einer Standardabweichung des Histogramms von einem häufigsten Pixelwert in der Organregion erhalten wird.

6. Bildverarbeitungsprogramm, um zu bewirken, dass ein Prozessor einen Prozess ausführt, der Folgendes umfasst:
Extrahieren einer Organregion, die ein Organ und eine Tumorkandidatenregion darstellt, die ein Merkmal zum Identifizieren eines Tumors in dem Organ aus Bilddaten aufweist, die durch Aufnehmen eines Bildes des Organs erhalten wurden;
Erzeugen einer Nicht-Organregion, die eine Region darstellt, in der das Organ nicht vorhanden ist, und die Tumorkandidatenregion und eine Hohlraumregion innerhalb der Organregion unter Verwendung der Bilddaten einschließt; und
Entfernen aus der extrahierten Tumorkandidatenregion einer Tumorkandidatenregion, die nur an einem Außenrandabschnitt der Nicht-Organregion in der Organregion vorhanden ist, wobei der Außenrandabschnitt der Nicht-Organregion eine Region ist, die nicht eine Region in der Nähe der Mitte der Nicht-Organregion einschließt, und die nicht weit vom Außenrand der Nicht-Organregion entfernt ist.

## Revendications

1. Procédé de traitement d'image exécuté par un ordinateur, le procédé comprenant :
une extraction d'une région d'organe représentant un organe et d'une région candidate de tumeur présentant une caractéristique pour identifier une tumeur dans l'organe à partir de données d'image obtenues en capturant une image de l'organe ;
une génération, à l'aide des données d'image, d'une région hors organe représentant une région dans laquelle l'organe n'est pas présent et qui inclut la région candidate de tumeur et une région de cavité au sein de la région d'organe ; et
une suppression, à partir de la région candidate de tumeur extraite, d'une région candidate de tumeur qui est présente uniquement dans une partie de bord externe de la région hors organe dans la région d'organe, la partie de bord externe de la région hors organe étant une région qui n'inclut pas une région proche du centre de la région hors organe et qui n'est pas éloignée du bord externe de la région hors organe.

2. Procédé de traitement d'image selon la revendication 1, dans lequel
le procédé de génération de la région hors organe inclut
une binarisation des données d'image à l'aide d'une valeur seuil représentant une valeur de pixel spécifiée de façon à générer une image binarisée dans laquelle un pixel présentant une valeur de pixel supérieure à la valeur seuil est représenté par une première valeur et un pixel présentant une valeur de pixel inférieure à la valeur seuil est représenté par une seconde valeur, et
une détection d'un pixel représenté par la seconde valeur dans la région d'organe ou dans une région d'organe étendue obtenue par extension de la région d'organe dans l'image binarisée pour générer la région hors organe.

3. Procédé de traitement d'image selon la revendication 2, dans lequel
la valeur seuil est une valeur de pixel entre une plage de valeurs de pixels correspondant à l'organe et une plage de valeurs de pixels correspondant à la tumeur dans les données d'image.

4. Procédé de traitement d'image selon la revendication 2, dans lequel
la valeur seuil est déterminée sur la base d'un histogramme de valeurs de pixels de pixels appartenant à la région d'organe.

5. Procédé de traitement d'image selon la revendication 4, dans lequel
la valeur seuil est obtenue en soustrayant un écart type de l'histogramme d'une valeur de pixel la plus fréquente dans la région d'organe.

6. Programme de traitement d'image destiné à amener un processeur à exécuter un procédé comprenant :
une extraction d'une région d'organe représentant un organe et d'une région candidate de tumeur présentant une caractéristique pour identifier une tumeur dans l'organe à partir de données d'image obtenues en capturant une image de l'organe ;
une génération, à l'aide des données d'image, d'une région hors organe représentant une région dans laquelle l'organe n'est pas présent et qui inclut la région candidate de tumeur et une région de cavité au sein de la région d'organe ; et
une suppression, à partir de la région candidate de tumeur extraite, d'une région candidate de tumeur qui est présente uniquement dans une partie de bord externe de la région hors organe dans la région d'organe, la partie de bord externe de la région hors organe étant une région qui n'inclut pas une région proche du centre de la région hors organe et qui n'est pas éloignée du bord externe de la région hors organe.
